# EUROPEAN PATENT SPECIFICATION

(11) **EP 1 007 260 B1**
(45) Date of publication and mention of the grant of the patent: **30.01.2002**
(21) Application number: 98930859.8
(22) Date of filing: 19.06.1998
(51) Int. Cl.: B23D 21/08, B23D 21/06

(54) **PIPE CUTTER AND GROOVER**
VORRICHTUNG ZUM SCHNEIDEN UND RILLEN VON ROHREN
APPAREIL POUR COUPER ET RAINURER LES TUYAUX

(30) Priority: 19.06.1997 GB 9712985
(43) Date of publication of application: 14.06.2000
(73) Proprietor: Oystertec plc, Manchester M2 3AB (GB)
(72) Inventor: WAKELIN, Richard, John, Summerbridge, Harrogate HG3 4HY (GB)
(74) Representative: Harrison Goddard Foote
(86) International application number: GB9801635
(87) International publication number: WO9857772

(56) References cited:
- FR-A- 2 307 632
- PATENT ABSTRACTS OF JAPAN vol. 013, no. 143 (M-811), 7 April 1989 & JP 63 306815 A (RETSUKISU KOGYO KK), 14 December 1988
- PATENT ABSTRACTS OF JAPAN vol. 095, no. 007, 31 August 1995 & JP 07 100545 A (NIPPON KOKAN PIPE FITTINGS MFG CO LTD), 18 April 1995

## Description

The present invention relates to a tool and method for cutting and grooving pipes or tubes. More specifically, the invention relates to a labour-saving device which can be used to cut a length of pipe or tube, when such a pipe or tube is required to have a groove near one end. Reference will be made hereinafter to pipes, but it should be appreciated that the invention has application to other tubular elements.

A pipe may need to have a groove near its end to enable a pipe fitting, such as a pipe coupling, to be firmly secured to the pipe. A coupling requiring such grooves in pipes to be joined is disclosed in GB 1460629A. In this doctiment, there is disclosed a coupling having hooks or fingers (each of which has a boss at its remote end) provided in one part of a fitting clip. The hooks are slid, against the action of a spring which is mounted in a hollow sliding cylindrical member forming part of the fitting clip, into a groove in the pipe to be joined. The hooks are then kept locked into the grooves by a spring-mounted sliding hollow cylindrical member which slides back towards the pipe to be joined and slips over the hooks to secure them in place. Other similar pipe fittings are disclosed in GB 9703287.4.

It is known to provide tools which can separately cut pipes or provide grooves in pipes. However, the need to use two separate tools is not cost effective and is labour intensive.

Additionally, it is known from the prior art to provide power driven tools or machines which can simultaneously cut and groove pipes. Such machines are disclosed in US 3985051 or JP-A-63 306 815, for example. In order for a machine to achieve simultaneous cutting and grooving, great mechanical strength is required. Typically, the cutting and grooving components are positioned adjacent on a common shaft, so that in use, the cutting and grooving elements operate in unison on the surface of a rotating pipe. It will be appreciated that because these machines are bulky the pipe rotates relative to the machine. Additionally, such machines cannot be easily or rapidly reconfigured since components have to be disassembled from the common spindle and reassembled thereon. Moreover. machines of this type are not cost-effective because of the time taken to perform the task. nor are they reliable because of the number of moving parts and the tendency to system failure. A yet further disadvantage associated with prior art machines is that pipe material is removed during the grooving process. As a result of this, pipe strength is reduced in selected regions leading to areas of weakness consequently, such machines are only of use with pipes of some considerable thickness that can afford to have slots grooved out of them.

Thus a reliable, rapidly reconfigurable, easy to use, cost effective hand tool that could both cut and groove a variety of different sized pipes would offer immediate advantage to the industry.

The invention of the present application overcomes many of the problems associated with the prior art by providing a hand tool which combines the operations of cutting and grooving of pipes in a single device. Additionally by providing independently operable cutting and grooving elements the device can be used manually. The operation can be performed sequentially thus reducing the applied force required to cut and groove that has hitherto necessitated a mechanical source.

It is therefore a first object of the invention to provide a manually operated device that can both cut and groove a piece of pipe, thus reducing labour costs and improving efficiency.

It is a further object of the invention to provide a device for cutting and grooving pipes that is easily and rapidly reconfigured so as to cut and groove a variety of different sizes of pipes.

It is a yet further object of the invention to provide a device for cutting and grooving pipes that is light-weight and portable.

According to a first aspect of the present invention. there is provided a device for cutting and grooving a piece of pipe, the device comprising means for attaching the device to a pipe in a manner which. in use, permits relative rotation of the device about the pipe, and at least one pipe grooving element and a pipe cutting element, said elements being each mounted on the device for independent radial movement relative to the pipe to allow the at least one pipe grooving or pipe cutting elements to be selectively brought into contact with the pipe.

In one embodiment of the invention the attachment means includes the at least one pipe grooving element and/or the pipe cutting element.

In another embodiment of the invention there are provided two spaced apart pipe grooving elements between which is located the pipe cutting element.

In an embodiment of the invention the central cutting element is longitudinally and centrally mounted about a first axle, preferably the two grooving elements either side of the cutting element are also longitudinally and centrally mounted about said second and third axles respectively.

In another embodiment of the invention, the relative distances of the cutting element and the grooving elements from a longitudinal axis of the pipe are independently adjustable. Thus, the depths of the grooves may be adjusted as required. Preferably, the means of adjustment is via a screw thread which, ideally, is lockable so as to prevent unwanted movement. Other conventional means of adjustment are, however, also suitable for the purpose.

In another embodiment, the distances between the cutting element and the grooving elements can be independently adjusted and may be the same or different. Again, the means of adjustment is preferably a screw thread which ideally, is lockable. Other conventional means of adjustment are, however, also suitable for the purpose. It is preferable that the distances between the each of the two grooving elements and the cutting element are the same.

Thus, it will be appreciated that these particular embodiments of the invention allow the device to selectively determine both the depth of the grooves and their relative position from an end of the pipe.

In a further embodiment, the cutting element and the grooving elements are hard wheels mounted on axes. Other conventional hard cutting surfaces can also be used in place of hard wheels, for example hardened steel, alloy or ceramic blades or the like.

In a yet further embodiment of the invention, the device further comprises a pair of marker means, each marker means is suitably positioned with respect to the grooving elements and secured to the main body of the device so as to project a selected distance therefrom. Ideally, said marker means are adjustable in the distance to which they project so as to determine the depth to which the grooving elements can operate.

In an alternative embodiment of the invention the cutting element is used as a scribing means, whereby the pipe is provided with a central fiducial mark on its surface by the cutting means prior to being grooved and cut. This particular embodiment is particularly advantageous in the instance of providing pipes with standard grooves, as the fiducial mark acts as a further visual aid to ensure correct groove depth is achieved.

In a yet further embodiment of the invention, the device may be used to cut and groove pipes of diameter 5mm to 65mm, and more preferably pipes of diameter 15mm to 54mm. Ideally the pipes are constructed of material which can be grooved by deformation such materials include, not by way of limitation. metal or plastics or stainless steel or copper or galvanised carbon-steel or the like.

The principle of the invention thus resides in the use of a pipe-cutter tool which has three elements spaced apart from one another. Suitably, as described above the cutting element and grooving elements can be hard wheels mounted to rotate about three separate axles. Ideally, the axles are in-line with one another. In use, the pipe is mounted within the device and the cutting and/or grooving elements positioned so as to abut at least a part of the outer circumferential surface of the pipe. The pipe can additionally be secured, depending on the length of the pipe to be cut and grooved, in a conventional manner such as is the practice when cutting a pipe using a single cutter.

In operation, the three wheels are brought to impinge on to at least a part of the circumferential surface of the pipe using suitable adjustment means to adjust independently the distances of the cutting and grooving wheels from the axis of the pipe and from each other The central element is to be used for cutting, whilst the two outer elements are used to make two grooves in the pipe. The grooving and cutting wheels may be brought into contact with the pipe simultaneously if the pipe is of a small diameter and the operator can supply the force required to cut and groove simultaneously or sequentially in any order. If the cutting element is to provide a fiducial mark then the cutting element may be used prior to the grooving element. In practice it is more common to groove before cutting.

In operation, the device is rotated about the retained pipe so as to form a fiducial mark or until a groove of desired dimensions is formed in the pipe. The thread of the grooving elements can be released or backed off so as to reduce the manual force required to cut the pipe. The cutting element is then positioned and the device is further rotated until the pipe is severed, consequently each piece of pipe has a groove at a predetermined distance from the two newly cut ends.

According to a second aspect of the invention there is provided a method for cutting and grooving a piece of pipe, comprising attaching the device of the invention to the pipe, bringing the at least one of the pipe grooving elements and the pipe cutting element into contact with the pipe and relatively rotating the device about the pipe while applying sufficient force to effect cutting and grooving of the pipe.

It will be appreciated that the grooving and cutting operation can be conducted in the sequence order as described above or in an alternative embodiment the operation can be conducted by firstly cutting and then grooving a pipe; or in another alternative embodiment the operation can be conducted by firstly grooving followed by adjustment of the or each pipe grooving element to reduce pressure applied to the pipe end then cutting the pipe; or in another embodiment the operation can be conducted by firstly providing a fiducial mark and then grooving and cutting a pipe.

For a better understanding of the invention, reference will now be made by way of example only, to the following drawings wherein:
Figure 1 shows a plan view of a pipe cutting and grooving device according to the present invention;
Figure 2 shows a cross-sectional view of part of the device according to the present invention, showing the cutting and grooving elements; and
Figure 3 shows a cross-sectional view of a grooved pipe.

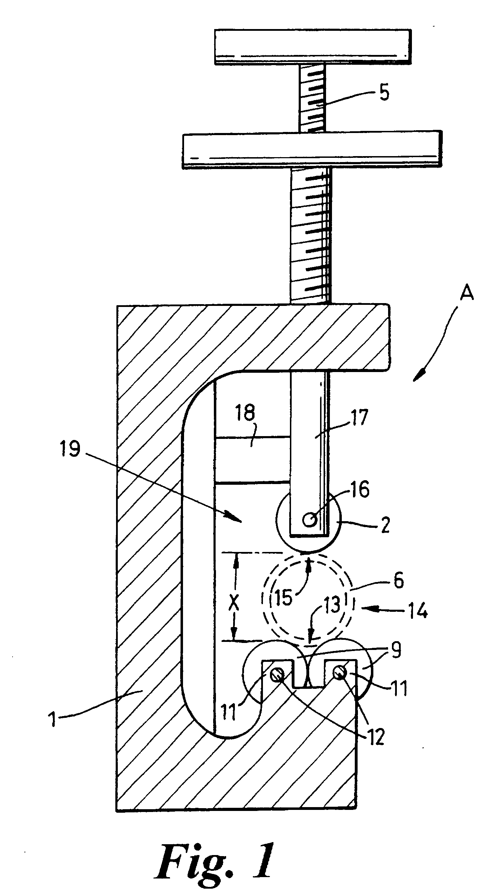

Referring to Figure 1, there is shown a plan view of a cutting and grooving tool (A) according to the invention. Hence, in this particular view only the top of grooving wheel (2) can be seen since. At one end of main body (1) there is provided two suitably fashioned projections (11) to which axles (12) of backing rollers (9) are attached. The backing rollers (9) are longitudinally and centrally positioned about axles (12) so that they are free to rotate, additionally the backing rollers are positioned so as to contact, but not impede, each other along region (13). In use, pipe (6) is supported and retained in region (14) by backing rollers (9).

Grooving wheel (2) is centrally and longitudinally mounted about axle (16). Axle (16) is held in position by arm (17) and further supported by support arm (18) which is attached to the main body (1) of the device. The distance that arm (17) projects into cavity (19) and towards backing rollers (9) is determined by the adjustment of screw thread (5).

In operation, that is during either sequential or simultaneous cutting and grooving of pipe (6), support for the pipe (6) is provided at region (14) by the backing rollers (9), whilst grooving and/or cutting occurs at an opposite region (15). Grooving wheel (2) contacts a fraction of the circumferential surface of the pipe (6) at region (15) and, as the device is rotated about pipe (6), the grooving wheel bites into the supported and retained pipe on its surface so causing circular deformation, thus forming a groove. It will be appreciated that the distance of the grooving element to the backing rollers (X) defines the space for accommodating pipe (6) and that distance (X) is adjustable by screw thread (5). Thus the device of the present application is capable of adapting to cut and groove a variety of circumferentially sized pipes.

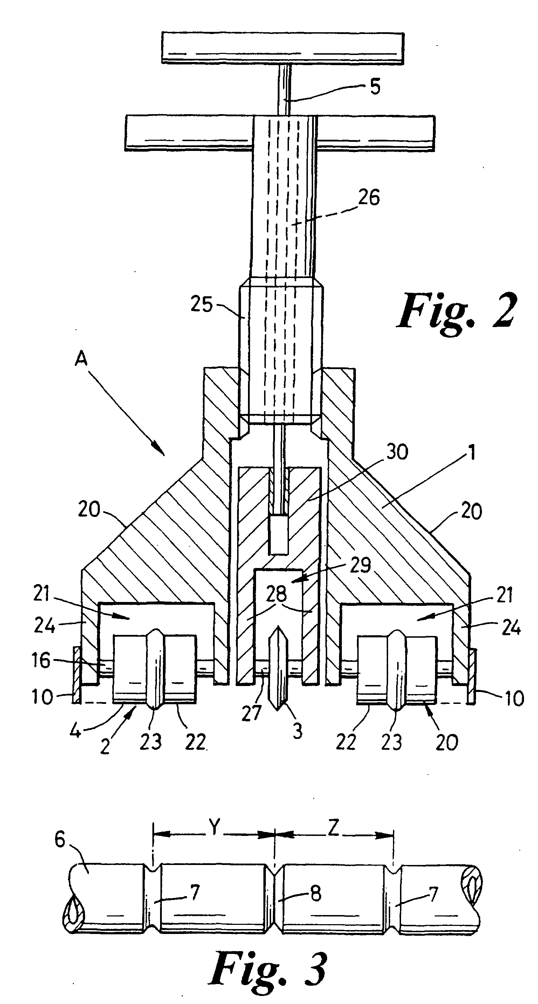

Referring now to Figure 2, there is shown a cross-sectional view of the device of the present invention showing the cutting and grooving elements in greater detail. It can be seen that pipe cutting and grooving device (A) comprises main body (I) and substantially accommodated therein, are two grooving wheels (2) which act as the grooving elements and cutting wheel (3) which acts as the cutting element.

Main body (1) is fashioned so as to form two sloped shoulders (20), each shoulder is provided with a suitably sized and shaped recess portion (21) which substantially accommodates a grooving wheel (2) therein. Grooving wheel (2) comprises a land or flat region (22) and a circular rounded protrusion (23), it is protrusion (23) which effects the deformation or groove on the surface of the pipe. In one particular embodiment of the invention, marker means (10) are provided. The marker means (10) are attached to projection (24) of shoulder (21), and the distance that they project is commensurate with the level of the land or flat region (22) of grooving wheel (2). In use, scratching of the surface of pipe (6) by the said marker means serves as an indication that protrusion (23) has grooved to the specified depth.

In another embodiment of the invention the cutting element can be used to scribe the pipe and produce a fiducial mark. In this instance, the cutting element is placed in contact with the pipe surface and rotated thereabout until a fiducial mark is produced on the pipe surface. The pipe is subsequently grooved until the grooves are commensurate with the depth of the mark, thus providing, in addition or in place of the marker means, a method for of ensuring a correct groove depth is achieved.

It will be apparent from the figure that screw thread (5) comprises two independent threads (25 and 26). Thread (25) determines and controls the movement of grooving elements (2) whilst thread (26) determines and controls the movement of cutting element (3). In this manner the cutting and grooving elements can operate independently of each other.

Cutting element (3) is centrally and longitudinally positioned about axle (27) the axle being held in position by projections (28) of body (30). Cutting element (3) is substantially accommodated within recess (29) of body (30). It will be appreciated that the relative distances between the grooving elements and the cutting element are adjustable (means not shown) as well as the relative distances of the cutting and grooving functional elements with respect to the pipe and backing rollers (not shown).

In operation, the grooving operation typically occurs first, followed by the cutting operation, in this instance the cutting element is subsequently adjusted. Thus, initially two grooves are formed in the pipe. The depth of the two outermost grooves formed in the pipe depends on the position of marker means (10), and/or the depth of the central fiducial mark. It is of note that the adjustment of the grooving wheels (2) and cutting wheel (3) with respect to the longitudinal axis of the pipe can also be limited by wide rollers (4) which are set on either side of each grooving wheel and/or the cutting wheel. Additionally it will be appreciated that the grooving wheels (2) may be fixed at distances from the cutting wheel (3) and that the grooving wheels (2) and the cutting wheel (3) may be part of the same unit, as in this embodiment, or may be separate.

In the embodiment where a central fiducial mark is provided, once the three grooves have been formed in the manner described above, the central wheel only, which is the cutting wheel (3), is then moved inwards radially towards the longitudinal axis of the pipe (not shown) by means of screw thread adjustment (5). The two outer grooving wheels (2) are left at fixed radial distances from the axis of the pipe (6). These distances may be the same or different, depending on the adjustment of the grooving wheels (the adjustment means have been omitted for the sake of clarity from Figure 2). By rotating the cutter about the axis of the pipe and reducing the radial distance of the central wheel the axis of the pipe, the pipe (6) is then cut into two pieces. There will then be a groove (7) near the end of each of the resulting pipes formed when the pipe (6) is cut.

Figure 3 shows a pipe (6) having grooves (7) formed by the grooving wheels (2), and groove (8) formed by the incomplete cutting action of cutting wheel (3) since its cutting tip is too far from the axis of the pipe (6) to allow cutting of the pipe (6). Thus, as the device (A) and the pipe (6) undergo rotation relative to one anther three grooves are formed; the middle of which (groove (8)) ultimately forms the ends of the two pipes once cutting is complete. The distances (X) and (Y) between grooves (7) and (8) may be adjusted as required using lateral adjustment means (not shown) for the grooving wheels (2) and cutting wheel (3).

It is important that the space between the grooves (7) and the square-cut end of the pipe (6) formed from groove (8) are precise fixed distances (Y) and (Z) in order to correspond with the precisely manufactured distances in the corresponding coupling members (not shown). Accordingly, precise adjustment of the relative positions of the grooving wheels (2) and the cutting wheel (3) offers a distinct advantage of the tool of the present invention.

The device of the present invention may be used to cut any pipe which can be cut and grooved by deformation, such as pipes made from metal or plastics. It is particularly applicable to stainless steel, copper and galvanised carbon-steel pipes.

The device itself is preferably made from metals, such as steel, although the use of suitably hard and strong plastics for the non-cutting parts of the device is also possible.

## Claims

1. A device for cutting and grooving a piece of pipe, the device comprising a means for attaching the device to a pipe in a manner which, in use, permits relative rotation of the device about the pipe, and at least one pipe grooving element and a pipe cutting element, said elements each being mounted on the device for independent radial movement relative to the pipe to allow the at least one pipe grooving or pipe cutting elements to be selectively brought into contact with the pipe.

2. A device according to Claim 1 wherein said means for attaching the device includes the at least one pipe grooving element and/or the pipe cutting element.

3. A device according to Claims 1 or 2 wherein the device comprises two spaced apart grooving elements between which is located the cutting element.

4. A device according to any preceding claim wherein said central cutting element is longitudinally and centrally mounted about a first axle.

5. A device according to any preceding claim wherein said two grooving elements are longitudinally and centrally mounted about said second and third axles respectfully.

6. A device according to any preceding claim wherein the relative distances of the cutting element and the grooving elements from a longitudinal axis of the pipe are independently adjustable.

7. A device according to Claim 6 wherein adjustment is via a screw thread or the like.

8. A device according to Claims 6 or 7 wherein said adjustment is lockable so as to prevent unwanted movement.

9. A device according to any preceding claim wherein the distances between cutting element and grooving elements can be independently adjusted.

10. A device according to Claim 8 wherein said adjustment is achieved by a screw thread or the like.

11. A device according to Claim 9 or 10 wherein the adjustment means is lockable so as to prevent unwanted movement.

12. A device according to any preceding claim wherein the cutting element and the grooving elements are hard wheels mounted on axes.

13. A device according to any of Claims 1 to 11 wherein the cutting element and grooving elements are hardened steel or alloy or ceramic blades or the like, mounted on axes.

14. A device according to any preceding claim further comprising a pair of marker means, wherein each marker means is suitably positioned with respect to the grooving element and secured to the main body of the device so as to project a selected distance therefrom.

15. A device according to Claim 14 wherein said marker means are adjustable in the distance to which they project so as to determine the depth to which the grooving element can operate.

16. A device according to any preceding claim wherein the cutting element is used as a scribing means, whereby the pipe is provided with a central fiducial mark on its surface by the cutting means prior to being grooved and cut.

17. A device according to any preceding claim for use in cutting and grooving pipes of diameter 5 mm to 65 mm.

18. A device according to Claim 17 for use in cutting and grooving pipes of diameter 15 mm to 54 mm.

19. A device according to any preceding claim for use in cutting and grooving pipes wherein the pipes are constructed of metal or plastics.

20. A device according to Claim 19 for use in cutting and grooving pipes constructed of stainless steel or copper or galvanised carbon steel.

21. A method for cutting and grooving a piece of pipe comprising attaching a device according to Claim 1 to the pipe, bringing the at least one of the pipe grooving elements and the pipe cutting element into contact with the pipe and relatively rotating the device about the pipe while applying sufficient force to effect cutting and grooving of the pipe.

22. A method according to Claim 21 wherein the method comprises firstly cutting and then grooving a pipe.

23. A method according to Claim 21 wherein the method comprises firstly grooving followed by adjustment of the or each pipe grooving element to reduce pressure applied to the pipe and then cutting the pipe.

24. A method according to Claim 21 wherein the method comprises firstly providing a fiducial mark and then grooving and cutting a pipe.

## Patentansprüche

1. Vorrichtung zum Schneiden und Nuten eines Rohrstückes, wobei die Vorrichtung eine Einrichtung zum Befestigen der Vorrichtung an einem Rohr derart, daß bei Gebrauch eine Relativdrehung der Vorrichtung um das Rohr möglich ist, und mindestens ein Rohr-Nutungselement sowie ein Rohrschneideelement aufweist, wobei diese Elemente jeweils zur unabhängigen Radialverschiebung relativ zum Rohr an der Vorrichtung montiert sind, so daß das mindestens eine Rohr-Nutungselement bzw. Rohrschneideelement wahlweise in Kontakt mit dem Rohr gebracht werden kann.

2. Vorrichtung nach Anspruch 1, bei der die Einrichtung zum Befestigen der Vorrichtung das mindestens eine Rohr-Nutungselement und/oder das Rohrschneideelement umfaßt.

3. Vorrichtung nach den Ansprüchen 1 oder 2, bei der die Vorrichtung zwei in einem Abstand voneinander angeordnete Nutungselemente umfaßt, zwischen denen das Schneideelement angeordnet ist.

4. Vorrichtung nach einem vorhergehenden Anspruch, bei der das mittlere Schneideelement in Längsrichtung und zentriert um eine erste Achse montiert ist.

5. Vorrichtung nach einem vorhergehenden Anspruch, bei der die beiden Nutungselemente in Längsrichtung und zentriert um die zweite bzw. dritte Achse montiert sind.

6. Vorrichtung nach einem vorhergehenden Anspruch, bei der die relativen Abstände des Schneideelementes und der Nutungselemente von einer Längsachse des Rohrs unabhängig einstellbar sind.

7. Vorrichtung nach Anspruch 6, bei der die Einstellung über ein Schraubgewinde oder dergleichen erfolgt.

8. Vorrichtung nach den Ansprüchen 6 oder 7, bei der die Einstellung arretierbar ist, um eine ungewollte Bewegung zu vermeiden.

9. Vorrichtung nach einem vorhergehenden Anspruch, bei dem die Abstände zwischen dem Schneideelement und den Nutungselementen unabhängig voneinander einstellbar sind.

10. Vorrichtung nach Anspruch 8, bei der die Einstellung durch ein Schraubgewinde oder dergleichen erfolgt.

11. Vorrichtung nach Anspruch 9 oder 10, bei der die Einstelleinrichtung arretierbar ist, um eine ungewollte Bewegung zu verhindern.

12. Vorrichtung nach einem vorhergehenden Anspruch, bei der das Schneideelement und die Nutungselemente auf Achsen montierte, harte Räder sind.

13. Vorrichtung nach einem der Ansprüche 1 bis 11, bei der das Schneideelement und die Nutungselemente auf Achsen montierte Klingen aus gehärtetem Stahl oder aus einer Legierung oder aus Keramik oder dergleichen sind.

14. Vorrichtung nach einem vorhergehenden Anspruch, ferner mit einem Paar von Markierungseinrichtungen, wobei jede Markierungseinrichtung relativ zum Nutungselement geeignet positioniert und am Hauptkörper der Vorrichtung so befestigt ist, daß sie um einen gewählten Abstand von diesem vorsteht.

15. Vorrichtung nach Anspruch 14, bei welcher der Abstand, mit dem die Markierungseinrichtung vorsteht, einstellbar ist, so daß die Tiefe, bis zu der das Nutungselement arbeiten kann, bestimmt wird.

16. Vorrichtung nach einem vorhergehenden Anspruch, bei dem das Schneideelement als Anreißeinrichtung verwendet wird, wobei das Rohr durch die Schneideeinrichtung auf seiner Oberfläche mit einer mittigen Bezugsmarkierung versehen wird, bevor es genutet und geschnitten wird.

17. Vorrichtung nach einem vorhergehenden Anspruch zur Verwendung beim Schneiden und Nuten von Rohren mit 5 mm bis 65 mm Durchmesser.

18. Vorrichtung nach Anspruch 17 zur Verwendung beim Schneiden und Nuten von Rohren mit 15 mm bis 54 mm Durchmesser.

19. Vorrichtung nach einem vorhergehenden Anspruch zur Verwendung beim Schneiden und Nuten von Rohren, wobei die Rohre aus Metall oder Kunststoff gefertigt sind.

20. Vorrichtung nach Anspruch 19 zur Verwendung beim Schneiden und Nuten von Rohren, die aus rostfreiem Stahl oder Kupfer oder galvanisiertem Kohlenstoffstahl bestehen.

21. Verfahren zum Schneiden und Nuten eines Rohrstückes, bei dem eine Vorrichtung nach Anspruch 1 an dem Rohr befestigt, mindestens das Rohr-Nutungselement und/oder das Rohrschneideelement in Kontakt mit dem Rohr gebracht und die Vorrichtung relativ um das Rohr herum verdreht wird, wobei eine Kraft aufgebracht wird, die zum Schneiden und Nuten des Rohrs ausreicht.

22. Verfahren nach Anspruch 21, wobei das Verfahren zunächst das Schneiden und dann das Nuten eines Rohrs umfaßt.

23. Verfahren nach Anspruch 21, wobei das Verfahren zunächst das Nuten, gefolgt vom Einstellen des oder jedes Rohr-Nutungselementes zum Verringern des auf das Rohr aufgebrachten Drucks, und dann das Schneiden des Rohrs umfaßt.

24. Verfahren nach Anspruch 21, wobei das Verfahren zunächst das Anbringen einer Bezugsmarke und dann das Nuten und Schneiden eines Rohrs umfaßt.

## Revendications

1. Dispositif pour couper et rainurer un tuyau, ledit dispositif comprenant des moyens de fixation dudit dispositif sur le tuyau de manière à, en fonctionnement, permettre une rotation relative du dispositif autour du tuyau, et au moins un élément de rainurage de tuyau et un élément de coupe de tuyau, lesdits éléments étant chacun associé au dispositif de manière à présenter un mouvement radial indépendant, relativement au tuyau, afin de permettre audit au moins un élément de rainurage de tuyau ou à l'élément de coupe de tuyau de pouvoir être sélectivement amenés en contact avec le tuyau.

2. Dispositif selon la revendication 1, **caractérisé en ce que** lesdits moyens de fixation du dispositif incluent l'élément de rainurage de tuyau et/ou l'élément de coupe de tuyau.

3. Dispositif selon l'une des revendications 1 ou 2, **caractérisé en ce qu'**il comprend deux éléments de rainurage espacés entre lesquels est situé l'élément de coupe.

4. Dispositif selon l'une quelconque des revendications précédentes, **caractérisé en ce que** ledit élément de coupe central est longitudinalement et centralement monté sur un premier axe.

5. Dispositif selon l'une quelconque des revendications précédentes, **caractérisé en ce que** lesdits deux éléments de rainurage sont longitudinalement et centralement montés respectivement sur un second et un troisième axe.

6. Dispositif selon l'une quelconque des revendications précédentes, **caractérisé en ce que** les distances relatives entre l'élément de coupe, ainsi que les éléments de rainurage, et un axe longitudinal du tuyau sont réglables indépendamment.

7. Dispositif selon la revendication 6, **caractérisé en ce que** le réglage est réalisé par l'intermédiaire d'une tige filetée ou similaire.

8. Dispositif selon l'une des revendications 6 ou 7, **caractérisé en ce que** ledit réglage est apte a être bloqué afin d'éviter tout mouvement involontaire.

9. Dispositif selon l'une quelconque des revendications précédentes, **caractérisé en ce que** les distances entre l'élément de coupe et les éléments de rainurage peuvent être réglés indépendamment.

10. Dispositif selon la revendication 8, **caractérisé en ce que** ledit réglage est réalisé par l'intermédiaire d'une tige filetée ou similaire.

11. Dispositif selon l'une des revendications 9 ou 10, **caractérisé en ce que** les moyens de réglage sont aptes à être bloqués afin d'éviter tout mouvement involontaire.

12. Dispositif selon l'une quelconque des revendications précédentes, **caractérisé en ce que** l'élément de coupe et les éléments de rainurage sont des roues durcies montées sur des axes.

13. Dispositif selon l'une quelconque des revendications 1 à 11, **caractérisé en ce que** l'élément de coupe et les éléments de rainurage sont des lames en acier trempé, ou en alliage, ou en céramique, ou similaire, montés sur des axes.

14. Dispositif selon l'une quelconque des revendications précédentes, **caractérisé en ce qu'**il comprend en outre, une paire de moyens de marquage, où chacun des moyens de marquage est convenablement positionné vis-à-vis de l'élément de rainurage et fixé au corps principal du dispositif afin d'y faire saillie d'une distance sélectionnée.

15. Dispositif selon la revendication 14, **caractérisé en ce que** la distance dont font saillie les moyens de marquage est réglable afin de déterminer la profondeur à laquelle le moyen de rainurage peut opérer.

16. Dispositif selon l'une quelconque des revendications précédentes, **caractérisé en ce que** l'élément de coupe est utilisé comme moyen de repérage, au moyen desquels le tuyau est pourvu d'un repère central sur sa surface par les moyens de coupe avant d'être rainuré et coupé.

17. Dispositif selon l'une quelconque des revendications précédentes, destiné à être utilisé pour la coupe et le rainurage de tuyaux de diamètre allant de 5 à 65 mm.

18. Dispositif selon la revendication 17, destiné à la coupe et au rainurage de tuyaux de diamètre allant de 15 à 54 mm.

19. Dispositif selon l'une quelconque des revendications précédentes, destiné à être utilisé dans la coupe et le rainurage de tuyaux où lesdits tuyaux sont réalisés en métal ou en plastique.

20. Dispositif selon la revendication 19, destiné à la coupe et au rainurage de tuyaux fabriqués en acier inoxydable, ou en cuivre, ou en acier au carbone galvanisé.

21. Procédé de coupe et de rainurage d'un tuyau comprenant les étapes de fixation d'un dispositif selon la revendication 1 audit tuyau, de déplacement d'au moins un élément de rainurage de tuyau et de l'élément de coupe de tuyau, jusqu'à venir en contact avec ledit tuyau, et de rotation relative du dispositif autour du tuyau tout en appliquant un effort suffisant pour effectuer la coupe et le rainurage du tuyau.

22. Procédé selon la revendication 21, **caractérisé en ce que** ledit procédé comprend d'abord la coupe et ensuite le rainurage d'un tuyau.

23. Procédé selon la revendication 21, **caractérisé en ce que** le procédé comprend d'abord le rainurage suivi du réglage du ou de chaque élément de rainurage de tuyau afin de réduire la pression appliquée au tuyau, puis la coupe du tuyau.

24. Procédé selon la revendication 21, **caractérisé en ce que** ledit procédé comprend d'abord la réalisation d'un repère, puis le rainurage et enfin la coupe du tuyau.
